Europäisches Patentamt

European Patent Office

Office européen des brevets

(11) Numéro de publication: **0 289 396 B1**

(12) **FASCICULE DE BREVET EUROPEEN**

(45) Date de publication de fascicule du brevet: **24.06.92** (51) Int. Cl.⁵: **B62D 5/07**, B60T 13/16

(21) Numéro de dépôt: **88400961.4**

(22) Date de dépôt: **20.04.88**

(54) **Valve de commande, notamment pour les freins hydrauliques d'un véhicule.**

(30) Priorité: **23.04.87 FR 8705965**

(43) Date de publication de la demande:
**02.11.88 Bulletin 88/44**

(45) Mention de la délivrance du brevet:
**24.06.92 Bulletin 92/26**

(84) Etats contractants désignés:
**DE ES FR GB**

(56) Documents cités:
**DE-A- 2 001 680**
**FR-A- 2 080 731**
**FR-A- 2 449 009**
**GB-A- 2 065 044**

(73) Titulaire: **MARREL**
**Zone Industrielle Sud**
**F-42160 Andrezieux-Boutheon(FR)**

(72) Inventeur: **Tardy, Maurice**
**20, rue Eugène Joly**
**F-42000 Saint Etienne(FR)**
Inventeur: **Marcon, Louis**
**31, rue Neyron**
**F-42000 Saint Etienne(FR)**

(74) Mandataire: **Rinuy, Santarelli**
**14, avenue de la Grande Armée**
**F-75017 Paris(FR)**

# Description

La présente invention est relative à une valve de commande hydraulique, susceptible d'être utilisée sur un circuit hydraulique, en vue de réaliser deux fonctions à partir d'une unique pompe hydraulique. Elle concerne plus particulièrement, quoique non exclusivement, une valve destinée à être montée sur le circuit hydraulique d'un véhicule automobile, pour permettre l'alimentation simultanée ou indépendante, d'une part d'une direction hydraulique, d'autre part d'un système de freinage pour les roues du véhicule.

On sait, en effet, que sur les circuits hydrauliques de type connu, il est courant d'utiliser une pompe hydraulique pour chacune des fonctions à réaliser. Il en résulte, pour l'installation, un prix de revient relativement important.

L'invention a pour but d'éviter ces inconvénients, en réalisant une valve pour la commande de l'une des deux fonctions (par exemple le freinage), sur un circuit, à deux fonctions, alimenté par une unique pompe hydraulique.

En fait, on connaît déjà d'après le document FR2.080.731 un circuit hydraulique d'assistance comportant une valve adaptée, en cas de freinage, à dériver du fluide d'alimentation normalement, destiné à une servo-direction, vers une chambre d'assistance située derrière le piston d'un système de freinage classique et dans laquelle pénètre une tige de commande. Cette valve comporte un distributeur attelé à un levier dont la position est déterminée par les positions instantanées de la tige de commande et du piston.

A la différence de la valve précitée, l'invention vise une valve pour la réalisation de deux fonctions distinctes à partir d une unique pompe qui permette que la pression du fluide distribué vers l'une des fonctions soit proportionnelle à un effort exercé par un utilisateur sur un organe de commande.

Plus précisément, elle propose une valve de commande hydraulique à intercaler entre une canalisation d'alimentation sous pression et deux canalisations de sortie, pour alimenter deux circuits ayant des fonctions distinctes et indépendantes, comportant un ensemble de distribution monté coulissant dans un alésage d'un corps sous l'action d'un organe de manoeuvre et adapté à relier la canalisation d'alimentation au premier circuit par la première canalisation, suivant le principe connu d'un circuit amont en centre ouvert, et adapté à relier la seconde canalisation du second circuit, soit à la canalisation d'alimentation, soit à une canalisation de retour, caractérisé en ce que l'organe de manoeuvre agit sur l'ensemble de distribution par l'intermédiaire d'un ressort de compression tandis qu'une partie au moins de cet ensemble de distribution est soumise, à l'encontre de ce ressort, à la pression régnant dans cette seconde canalisation, grâce à quoi cet ensemble distributeur est adapté à envoyer au second circuit une pression porportionnelle à un effort exercé par l'utilisateur sur l'organe de manoeuvre, cet ensemble de distribution comportant en outre des moyens d'amortissement par effet de dash-pot.

L'invention propose ainsi une valve de commande hydraulique à intercaler entre une canalisation d'alimentation sous pression et deux canalisations et, pour alimenter deux circuits correspondant à des fonctions distinctes, caractérisé en ce qu'elle groupe les trois éléments fonctionnels suivants :
- une cellule d'asservissement qui relie la canalisation d'alimentation au premier circuit de la canalisation, suivant le principe connu d'un circuit amont en centre ouvert ;
- un distributeur de connexion à deux positions pour le second circuit de la canalisation ;
- une cellule d'asservissement susceptible d'envoyer au second circuit de la canalisation, une pression proportionnelle à l'effort exercé par l'utilisateur et ammortie par l'effet de "dash-pot".

Bien entendu, le dispositif selon l'invention est prévu pour assurer une totale sécurité, garantissent l'indépendance du fonctionnement des deux circuits.

Les dessins annexés, donnés à titre d'exemple non limitatif, permettront de mieux comprendre les caractéristiques de l'invention, et les avantages qu'elle est susceptible de procurer.

La figure 1 est un schéma hydraulique illustrant le principe de la connexion réalisée par une valve de commande selon l'invention.

La figure 2 est une coupe longitudinale de la valve en question, lorsqu'elle est en position neutre, c'est-à-dire que le circuit de direction reste branché en permanence, alors que le circuit de freinage n'est pas actionné.

La figure 3 est une coupe analogue, lorsque l'utilisateur actionne le circuit de freinage, alors que, par ailleurs,le circuit de direction reste normalement alimenté.

L'appareil illustré sur les dessins comprend une pompe hydraulique 1 susceptible d'envoyer de l'huile sous pression dans une canalisation de refoulement 2, d'où elle peut être distribuée vers une canalisation 3 commandant le circuit de direction d'un véhicule et/ou vers une canalisation 4, commandant le circuit de freinage de ce même véhicule.

La pompe 1 prélève l'huile dans un réservoir 5, et la refoule vers un point 6, sous une pression dont la valeur maximum peut être par exemple de l'ordre de 140 bars. Un clapet de surpression réglable 7 est monté en dérivation au point 6 ; en cas de déclenchement par excès de pression, l'excès d'huile est renvoyé vers un réservoir 8. Au-delà du point 6, la canalisation 2 alimente la valve de commande 9 selon l'invention, pour alimenter la canalisation de direction 3 et/ou la canalisation de freinage 4.

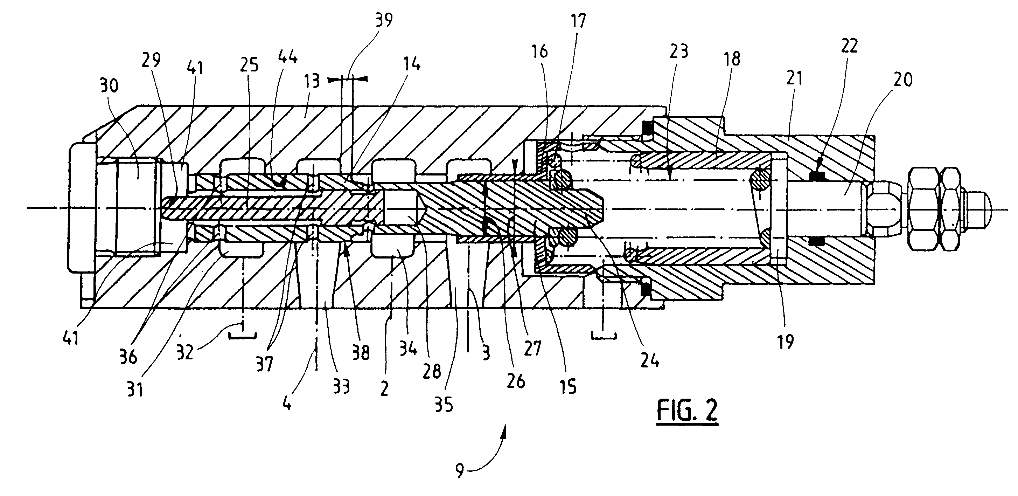

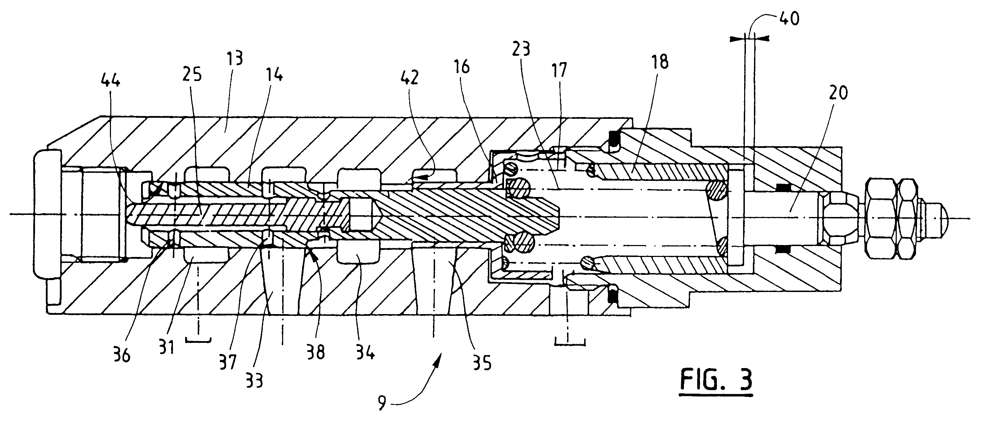

La valve de commande 9 (voir figures 2 et 3) groupe les trois éléments fonctionnels suivants :

- une cellule d'asservissement de direction 10 qui relie la canalisation d'alimentation 2 au circuit de direction 3, suivant le principe connu d'un circuit amont en centre ouvert ;
- un distributeur de connexion 11 à deux positions pour le freinage ;
- une cellule d'asservissement de freinage 12, susceptible d'envoyer au circuit de freinage 4 une pression proportionnelle à l'effort exercé par le conducteur sur la pédale de frein, amortie par un effet dit de "dash-pot".

Pour cela, la valve de commande 9 comporte un corps 13, dans l'alésage 44 duquel peut coulisser un tiroir cylindrique creux 14. Celui-ci se termine par une tête 15'autour de laquelle coulisse le manchon d'un clapet 16, dont l'arrière sert d'appui à un ressort hélicoïdal de compression 17. Ce dernier est soumis à la poussée d'une bague 18, en butée sur une collerette 19 d'un poussoir 20 qui dépasse à l'arrière d'un chapeau fixe 21, refermant le corps 13.

Un joint 22 assure l'étanchéité coulissante du poussoir 20 dans le chapeau 21.

A l'intérieur de la bague 18, un ressort helicoïdal taré 23 est comprimé entre la collerette 19 du poussoir 20, et l'extrémité arrière 24 de la tête 15 du tiroir 14.

Dans la partie avant cylindrique de celui-ci, coulisse un piston 25 dont la section est calculée pour qu'il équilibre la section annulaire du clapet 16, comprise entre :

- son diamètre de guidage 26 sur le tiroir 14 ;
- et son diamètre de guidage 27 dans le corps 13.

De plus, ce piston 25 délimite une chambre d'amortissement 28 au fond de l'alésage borgne où il coulisse dans le tiroir 14, tandis que son pied 29 prend appui sur un bouchon vissé fixe 30, qui referme le corps 13.

Dans le corps 13, le long du tiroir 14, sont réparties quatre gorges annulaires, à savoir :

- une gorge 31 reliée à une canalisation de retour de frein 32 ;
- une gorge 33 reliée à la canalisation de freinage 4 ;
- une gorge 34 reliée à la canalisation 2 d'arrivée de pression ;
- une gorge 35 reliée à la canalisation 3 de la direction.

Des trous latéraux 36 et 37, percés dans la paroi cylindrique creuse du tiroir 14 sont prévus respectivement au niveau des gorges 31 et 33, avec possibilité d'être obturés en partie, ou en totalité, par coulissement étanche dans l'alésage du corps statorique 13.

Une arête circulaire 38 est prévue sur l'extérieur du tiroir 14, pour laisser en communication plus ou moins étranglée (figure 3) les gorges 34 et 33 ou bien, au contraire, pour les isoler l'une de l'autre (figure 2) par coulissement étanche dans le corps 13.

Le fonctionnement est le suivant :

L'appareil permet de réaliser deux fonctions à partir d'une pompe unique :

1°) alimenter un système de direction 3 à une pression maximale donnée, par exemple 140 bars;

2°) alimenter un circuit de frein 4 à une pression:

P frein = f (effort sur la pédale) avec une pression maximale des freins qui peut être inférieure à la pression du système de direction, par exemple 90 bars.

Ces deux fonctions peuvent être indépendantes ou simultanées.

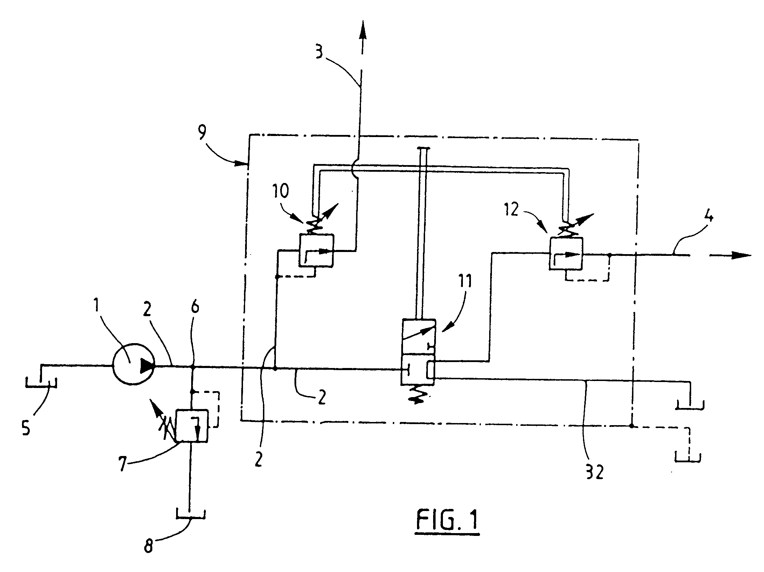

L'alimentation de pression des freins est obtenue en 4 au moyen d'une cellule de réduction de pression tarable 12. Le circuit amont 2 qui alimente la direction étant en centre ouvert, l'alimentation de la cellule de réduction de pression 12 est obtenue au moyen d'un système du type à clapet tarable (figure 1).

La figure 2 représente la valve 9 en position de repos. En l'absence d'effort sur le poussoir 20, la gorge 33 du circuit de frein est reliée à la gorge de retour de frein 32, par l'intermédiaire des trous latéraux 36 et 37 du tiroir 14. Le clapet 16 est en appui sur le chapeau 21. Le passage est donc libre entre la gorge 34 d'entrée de pression et la gorge 35 reliée à la direction 3, tandis que le passage entre la gorge d'entrée de pression 34 et la gorge 33 des freins est obturé au moyen du tiroir 14.

Dans cette configuration, le passage de la pompe 1 à la direction 3 est assuré, les freins 4 étant, eux, reliés au retour 32 (figure 1). Le piston 25 sert à équilibrer la section annulaire du clapet 16 comprise entre les diamètres 26 et 27. De plus, le piston 25 assure l'équilibre dynamique du tiroir 14 par effet de "dash-pot".

L'ensemble correspond à une course morte 39 (figure 2).

La figure 3 représente la valve en position de freinage. Lorsqu'on applique un effort sur le poussoir 20 la compression du ressort 17, situé entre la bague 18 et le clapet 16, assure une montée en pression dans la gorge 34 d'entrée de pression, telle que :

$$P_e . S_c = K_1.X,$$

avec :

Pe = pression d'entrée sur la gorge 34 ;

Sc = section annulaire du clapet 16 comprise entre les diamètres de guidage 26 et 27 ;

K1 = raideur du ressort 17 ;

X = course du poussoir 20 - course morte 40.

Simultanément, la compression du ressort 23 entraîne le déplacement du tiroir 14 dans le corps 13. Les trous latéraux 36 du tiroir 14 sont alors obturés, n'autorisant plus la jonction de la gorge de freinage 33 à la gorge 31 du retour frein 32. Les trous latéraux 37, eux, continuent à assurer la liaison de la gorge de frein 33 à la chambre 41 ménagée dans le corps 13, autour du pied 29. Le frein hydraulique de l'arête 38 autorise alors le passage de la gorge d'entrée de pression à l'orifice 34 vers la gorge de freinage 33, et ceci de façon que :

$$\text{P frein} \cdot ST = K2 \cdot X$$

avec :

ST = section annulaire du tiroir 14 comprise entre le diamètre extérieur du tiroir et le diamètre du piston 25 ;

K2 = raideur du ressort 23.

Lorsque cette condition est satisfaite, le tiroir 14 recule, l'arête 38 bloque alors le passage de 34 vers 33. Les trous latéraux 36 ne sont toujours pas découverts, n'autorisant donc pas le passage de 33 vers 31. La pression sur les freins est donc proportionnelle à l'effort sur le poussoir 20.

En position de freinage, la liaison de l'entrée de pression 34 vers la gorge de direction 35 est toujours assurée par le passage correspondant à la levée du clapet repère 16 par rapport à l'arête 42 du corps 13.

L'appareil selon l'invention présente les avantages suivants :

- permettre l'alimentation simultanée ou indépendante d'une direction hydraulique et d'un système de freinage à partir d'une seule pompe ;
- permettre l'alimentation de la pression du circuit de freinage à une valeur connue, et compatible avec la tenue des joints du système de frein ;
- permettre un freinage progressif fonction de l'effort sur la pédale.

## Revendications

1. Valve de commande hydraulique à intercaler entre une canalisation d'alimentation sous pression (2) et deux canalisations de sortie (3, 4), pour alimenter deux circuits ayant des fonctions distinctes et indépendantes, comportant un ensemble de distribution (14) monté coulissant dans un alésage (44) d'un corps (13) sous l'action d'un organe de manoeuvre (20) et adapté à relier la canalisation d'alimentation (2) au premier circuit par la première canalisation (3), suivant le principe connu d'un circuit amont en centre ouvert, et adapté à relier la seconde canalisation (4) du second circuit, soit à la canalisation d'alimentation (2), soit à une canalisation de retour (32), caractérisé en ce que l'organe de manoeuvre (20) agit sur l'ensemble de distribution (14) par l'intermédiaire d'un ressort de compression (23) tandis qu'une partie au moins de cet ensemble de distribution (14) est soumise, à l'encontre de ce ressort (23), à la pression régnant dans cette seconde canalisation (4), grâce à quoi cet ensemble distributeur (14) est est adapté à envoyer au second circuit une pression porportionnelle à un effort exercé par l'utilisateur sur l'organe de manoeuvre (20), cet ensemble de distribution comportant en outre des moyens d'amortissement (25) par effet de dash-pot.

2. Valve de commande selon la revendication 1, caractérisée en ce que l'ensemble de distribution comporte un tiroir cylindrique creux (14) terminé par une tête (15), soumis audit ressort (23) pour relier la canalisation d'alimentation (2) à la seconde canalisation et un clapet (16) muni d'un manchon adapté à obturer la connexion entre une gorge d'alimentation (34) et une première gorge de sortie (35) adaptée à être connectée à la première canalisation (3), toutes deux ménagées dans le corps, l'arrière de ce clapet servant d'appui à un second ressort hélicoïdal de compression (17), soumis à la poussée d'une bague (18), en butée sur une collerette (19) d'un poussoir (20) formant organe de manoeuvre, lequel dépasse à l'arrière d'un chapeau fixe (21) refermant le corps (13).

3. Valve de commande selon la revendication 2, caractérisée en ce que, au travers du tiroir cylindrique creux (14), sont ménagés des perçages (36,37) adaptés à mettre ou non en communication, selon la position du tiroir (14) dans son alésage, une seconde gorge de sortie (33), adaptée à être connectée à la seconde canalisation, et une gorge de retour au réservoir (31).

4. Valve de commande selon la revendication 3, caractérisée en ce que la paroi extérieure du tiroir (14) comporte une arête circulaire (38) pour mettre en communication plus ou moins étranglée la gorge d'alimentation (34) et la seconde gorge de sortie (33).

5. Valve de commande selon la revendication 4, caractérisée en ce que les moyens d'amortissement comportent un piston (25) coulissant à l'intérieur du tiroir cylindrique creux en y définissant une chambre d'amortissement (28) et disposé en appui contre une butée (30) fixe par rapport au corps (13).

6. Valve de commande selon la revendication 5, caractérisée en ce que la section du piston (25) est calculée pour que ce piston équilibre la section annulaire du clapet (16).

7. Valve de commande selon l'une quelconque des revendications 1 à 6, caractérisée en ce que la première canalisation (3) est destinée à être connectée au circuit de direction d'un véhicule.

8. Valve de commande selon l'une quelconque des revendications 1 à 7, caractérisée en ce que la seconde canalisation (4) est destinée à être connectée au circuit de freinage d'un véhicule, si bien que ledit ensemble de distribution envoi au cicuit de freinage, par la seconde canalisation (4), une pression proportionnelle à l'effort exercé par le conducteur sur la pédale de frein à laquelle est attelé l'organe de manoeuvre (20).

**Claims**

1. A hydraulic control valve, to be connected between a pressurized supply line (2) and two outlet lines (3, 4) for supplying two circuits having different and independent functions, comprising a distribution assembly (14) mounted to be slidable in a bore (44) in a body (13) as a result of the action of an operating element (20) and adapted to connect the supply line (2) to the first circuit by the first line (3), in accordance with the known principle of an open centre upstream circuit, and adapted to connect the second line (4) of the second circuit either to the supply line (2) or to a return circuit (32), characterized in that the operating element (20) acts on the distribution assembly (14) through the intermediary of a compression spring (23) whereas a part at least of the said distribution assembly (14) is subjected, against the action of this spring (23), to the pressure present in the said second line (4), as a result of which this distribution assembly (14) is adapted to transmit to the second circuit a pressure proportional to a force exerted by a user on the operating element (20), this distribution assembly also comprising means for damping (25) by a dashpot effect.

2. A control valve according to claim 1, characterized in that the distribution assembly (14) comprises a hollow cylindrical slide valve (14) ending in a head (15) subjected to the said spring (23) in order to connect the supply line (2) to the second line, and a valve (16) equipped with a sleeve adapted to close the connection between a supply groove (34) and a first outlet groove (35) adapted to be connected to the first line (3), both being formed in the body, the rear portion of this valve serving as a bearing for a second helical compression spring (17) which is subjected to the pressure of a ring (18) in abutting engagement with a flange (19) on a plunger (20) forming the operating element (20) the rear end of which passes through a fixed cap (21) closing off the body (13).

3. A control valve according to claim 2, characterized in that apertures (36, 37) are formed through the hollow cylindrical slide valve (14) adapted to put into communication, or not, depending on the position of the slide valve (14) in its bore, a second outlet groove (33) adapted to be connected to the second line and a groove (31) for returning fluid to the reservoir.

4. A control valve according to claim 3, characterized in that the exterior wall of the slide valve (14) comprises a circular stop (38) to put in more or less restricted communication the supply groove (34) and the second outlet groove (33).

5. A control valve according to claim 4, characterized in that the damping means comprise a piston (25) which slides inside the hollow cylindrical slide valve defining within it a damping chamber (28) and bearing against a stop (30) which is fixed in relation to the body (13).

6. A control valve according to claim 5, characterized in that the cross-section of the piston (25) is calculated so that the piston balances the annular cross-section of the valve (16).

7. A control valve according to any one of claims 1 to 6, characterized in that the first line (3) is adapted to be connected to the steering circuit of a vehicle.

8. A control valve according to any one of claims 1 to 7, characterized in that the second line (4) is adapted to be connected to the braking circuit of a vehicle so that said distribution assembly transmits to the braking circuit, through the second line (4), a pressure proportional to the force exerted by the driver on the brake pedal to which the operating element (20) is coupled.

## Patentansprüche

1. Hydraulisches Steuerventil zur Zwischenschaltung zwischen eine mit Druck beaufschlagte Versorgungsleitung (2) und zwei Ausgangsleitungen (3, 4) zur Versorgung von zwei Kreisen mit unterschiedlichen und voneinander unabhängigen Funktionen, enthaltend eine Verteilereinheit (14), welche in der Bohrung (44) eines Ventilgehäuses (13) unter der Wirkung eines Steuerorgans (20) verschieblich und derart ausgebildet ist, daß sie nach dem bekannten Prinzip eines in Mittelstellung offenen Zulaufs die Versorgungsleitung (2) über die erste Ausgangsleitung (3) mit dem ersten Kreis verbindet und die zweite Ausgangsleitung (4) des zweiten Kreises entweder mit der Versorgungsleitung (2) oder einer Rücklaufleitung (32) verbindet, **dadurch gekennzeichnet,** daß das Steuerorgan (20) über eine Druckfeder (23) auf die Verteilereinheit (14) wirkt, während wenigstens ein Teil der Verteilereinheit (14) dem dieser Federkraft (23) entgegengerichteten, in der zweiten Ausgangsleitung (4) herrschenden Druck ausgesetzt ist, wodurch mittels der Verteilereinheit (14) der zweite Kreis mit einem Druck beaufschlagbar ist, welcher der vom Benutzer auf das Steuerorgan (20) ausgeübten Kraft proportional ist, und im übrigen die Verteilereinheit Dämpfungsmittel (25) mit der Wirkung eines Dämpfungszylinders aufweist.

2. Steuerventil nach Anspruch 1, **dadurch gekennzeichnet,** daß die Verteilereinheit einen hohlzvlindrischen Schieberkörper (14) mit einem von der Federkraft (23) beaufschlagten Kopfstück (15) am Ende aufweist, um die Versorgungsleitung (2) mit der zweiten Ausgangsleitung zu verbinden, und weiterhin ein Ventilglied (16) mit einer Hülse, durch welche die Verbindung zwischen einer Anschlußkammer (34) der Versorgungsleitung und einer ersten Auslaßkammer (35), welche an die erste Ausgangsleitung (3) anschließbar ist, wobei beide Kammern in das Ventilgehäuse (13) eingearbeitet sind und die Rückseite des Ventilglieds eine Abstützung für eine zweite Schraubendruckfeder (17) bildet, auf die durch eine Buchse (18) Druck ausübbar ist, welche an einem Flansch (19) eines das Steuerorgan bildenden Stößels (20) anliegt, der nach hinten aus einer das Ventilgehäuse (13) abschließenden, festen Endkappe (21) herausragt.

3. Steuerventil nach Anspruch 2, **dadurch gekennzeichnet,** daß der hohlzylindrische Schieberkörper (14) mit Querbohrungen (36, 37) versehen ist, durch welche je nach der Stellung des Schieberkörpers (14) in seiner Bohrung eine zweite Auslaßkammer (33), welche an die zweite Ausgangsleitung anschließbar ist, mit einer an ein Reservoir (31) angeschlossenen Rückleitungskammer zu verbinden oder von dieser zu trennen ist.

4. Steuerventil nach Anspruch 3, **dadurch gekennzeichnet,** daß die Außenwand des Schieberkörpers (14) mit einer umlaufenden Steuerkante (38) ausgebildet ist, um mehr oder weniger gedrosselt die Anschlußkammer (34) der Versorgungsleitung und die zweite Auslaßkammer (33) zu verbinden.

5. Steuerventil nach Anspruch 4, **dadurch gekennzeichnet,** daß die Dämpfungsmittel einen im Inneren des hohlzylindrischen Schieberkörpers gleitenden Kolben (25) aufweisen, der darin eine Dämpfungskammer (28) begrenzt und an einem mit Bezug auf das Ventilgehäuse (13) festen Anschlag (30) abgestützt ist.

6. Steuerventil nach Anspruch 5, **dadurch gekennzeichnet,** daß der Querschnitt des Kolbens (25) derart bemessen ist, daß der Kolben dem ringförmigen Querschnitt des Ventilglieds (16) das Gleichgewicht hält.

7. Steuerventil nach einem der Ansprüche 1 bis 6, **dadurch gekennzeichnet,** daß die erste Ausgangsleitung (3) an den Steuerkreis der Lenkung eines Fahrzeugs anschließbar ist.

8. Steuerventil nach einem der Ansprüche 1 bis 7, **dadurch gekennzeichnet,** daß die zweite Ausgangsleitung (4) an den Steuerkreis für die Bremsung eines Fahrzeugs anschließbar ist, so daß mittels der Verteilereinheit der Steuerkreis für die Bremsung über die zweite Ausgangsleitung (4) mit einem Druck beaufschlagbar ist, welcher der vom Fahrzeugführer auf das mit dem Steuerorgan (20) verbundene Bremspedal ausgeübten Kraft proportional ist.

FIG.1

FIG. 2

FIG. 3